# EUROPEAN PATENT APPLICATION

(11) **EP 1 247 455 A2**
(43) Date of publication of application: **09.10.2002**
(21) Application number: 01128365.2
(22) Date of filing: 30.11.2001
(51) Int. Cl.: A23G 7/00

(54) **Method and device for pulling cones or similar containers containing an edible product, in particular ice-cream cones, out of their supports**

(30) Priority: 05.04.2001 IT MI010740
(71) Applicant: SIDAM S.R.L., 20032 Cormano (MI) (IT)
(72) Inventor: Grigoli, Franco Albino Luigi, 20125 Milano (IT)
(74) Representative: La Ciura, Salvatore

(57) **Abstract**

This invention relates to a method and the respective device for pulling cones or containers or similar supports containing an edible product, in particular ice-cream cones, out of the moulds.

According to the invention at least one blast of air under pressure is played against the upper edge of the mould, just near the air-casing between mould and cone until it causes the lifting of the latter, after which the locking of pincers around the cone is controlled, which cone leans against the arms of said pincers and can be removed.

Ideally, between the arms of the pincers a sensor is positioned, which sensor is able to detect the presence of the cone and allow the operation of the pincers in due time.

## Description

This invention relates to a method and the respective device for pulling cones or similar supports containing an edible product, in particular ice-cream cones, out of the moulds. According to the invention at least one blast of pressurised air is played against the upper edge of the mould, just near the air-casing between mould and cone until it causes the lifting of the latter, after which the locking of pincers around the cone is controlled, which cone leans against the arms of said pincers and can be removed.

According to a preferred embodiment a sensor able to detect the presence of the cone and to allow the activation of the pincers in due time is placed between the arms of the pincers.

Said operation allows to pull out of the moulds those cones not sticking out of said mould, without the need to seize the cone with devices that may damage it.

The invention is suitable in the industry for packaging of edible products and in particular in the industry for the production of ice-creams.

The realisation of systems for producing ice-creams implies the problem to pick up the products at cycle-end to send them to the packaging. In particular, in the case of ice-creams in cone, there is the problem to pull out of the mould the cone with the frozen product. When the cone, due to its dimensions, sticks out of the mould for some centimetres, there is the need to turn to pincers devices that engage the cone near the upper edge and lift it by pulling it out of the tray.

The plot thickens when the length of the cone is essentially equal to the length of the mould, and therefore the cone does not stick out or sticks out to a minimum extent, or to an extent not sufficient to allow seizing it with the common pincers devices.

With this kind of products, accordingly, the extraction of the cone is carried out by hand, with all the consequent, both economical and hygienic, drawbacks.

For this reason the sector requires means of extraction allowing to pull out of the moulds the ice-cream cones without the need of manual interventions of the operator, interventions easy to be carried out, small-sized, in order that they can be easily applied also to already existing systems and with limited expenses.

This problem is now solved by this invention that proposes a method and the respective device to pull out of the mould cones containing an edible product, wherein a blast of pressurised air is played between the mould and the cone, which causes the lifting of the cone that can be easily seized and removed by a pincers device.

According to one embodiment of the invention, on the support of the pincers device, a sensor able to detect the presence of the cone and activate the operation of the pincers when the cone is lifted by the mould for a sufficient distance is fitted.

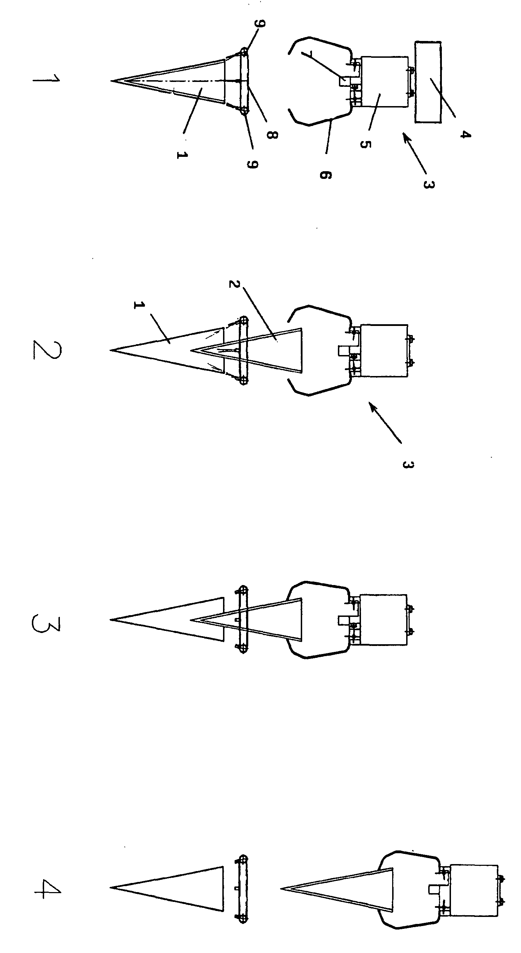

This invention will be now described in full details, by way of example and without any limitation thereto, with reference to the annexed figures 1 through 4 which schematically show a device for pulling out a cone out of the mould, according to the invention, during the different phases of seizing and extraction of the product.

With reference to the figures, 1 indicates the tray of a mould containing the cone of product 2.

The tray comes from the freezing area of a system for the production of ice-creams with the cone filled with product fully contained inside the mould.

The moulds with the trays 1 are in motion, for example dragged by chain devices and, in synchrony with the moulds as many seizing devices and extraction of the cone move off, one of which is indicated as 3 in the different figures.

The extraction device includes a support 4 on which a pneumatic cylinder 5 or similar is fitted, which activates the opening or locking of a plurality of arms of pincers 6.

Between the arms of the pincers, a sensor 7 of known type is fitted, for example a proximity sensor or similar able to detect the presence of a cone between the arms of the pincers.

According to the invention, each tray is coupled to a duct 8 or similar with one or more nozzles 9, connected to feeding devices of pressurised air not shown by the figure. The nozzles 9 play a blast of pressurised air against the edge of the mould, just near the interface area between mould and cone.

Known-type electronic devices, not shown in the figure, receive signals from the sensor 7 and activate the operation of the pincers and the blasts of air coming out of the nozzles 9.

The operation is the following.

The moulds with the trays 1 containing each a cone filled with product go along a freezing tank or tunnel, at the exit of which the product can be picked up.

The moulds are in motion being dragged, for example, by chains or analogous system, moving forward one step at a time and, at the exit of the freezing area over each tray an extraction device 3 is positioned, which device moves forward in synchrony with the mould.

At the time of the collection, pressurised air to the duct 8 is fed, which air, coming out at high speed from the nozzles 9, creates as many blasts of air played against the edge of the mould, which fit into place between the mould and the cone, thus creating an air cushion which causes the lifting of the cone of some centimetres.

The cone lifts for a distance sufficient to insert between the arms 6 of the pincers.

The presence of the cone between the arms of the pincers is detected by the sensor 7, which emits a signal, which is sent to the control devices.

The latter operate the pneumatic cylinder 5 in order to activate the arms 6 of the pincers, which close around the cone.

The embodiment of the pincers, at the moment of its closure, does not squeeze the cone, which only leans on the ends of the arms without being damaged.

At this moment the pincers device is lifted and the cone with the product is sent to the packaging, while the moulds return for a new production cycle.

The method according to the invention turns out to be extremely functional since allows to pull the cones of edible product out of the respective moulds automatically, making use of devices that can be completely sterilised and without the need of any manual intervention.

In the preceding description reference has been made to a system for the extraction of cone-shaped products; it is clear that the same embodiment can be also applied to the extraction of differently shaped products, for example truncated-cone, cylindrical with upper edge, polygonal or other shapes, without lying outside the scope of protection of this invention.

Clearly the dimensions, as well as the materials used, can change according to the requirements of use.

## Claims

1. Method for pulling out of the mould containers containing an edible product, in particular ice-cream cones, **characterised by** the fact that the container is lifted from the mould by means of one or more blasts of pressurised air, leading it to insert between the arms of pincers and afterwards the pincers are closed in order that the container leans against said arms.

2. Method according to claim 1, **characterised by** the fact that one or more blasts of pressurised air are played just near the area between cone and mould in such a way as to create an air cushion which activates the lifting of the cone, the upper part of which insert between the arms of the pincers; afterwards it is activated the locking of said arms and the pressurised air flow is stopped in order to allow the cone to rest against the arms closed by the pincers.

3. Method according to claim 2, **characterised by** the fact that the presence of the cone between the arms of the pincers is detected by means of a sensor and afterwards the locking of said arms is activated.

4. Device for pulling out of the mould containers containing an edible product, in particular ice-cream cones, **characterised by** the fact to include:
• devices suited to lift the container of the mould, leading the upper part to insert between the arms of the pincers;
• devices suited to close said pincers after the container is inserted between said arms.

5. Device according to the claim 4, **characterised by** the fact that said devices suited to activate the lifting of the cone are composed of one or more nozzles suited to play as many blasts of pressurised air between the cone and the mould.

6. Device according to the claim 5, **characterised by** the fact of providing means apt to limit the closure of the pincers, so that at the moment of its closure, it does not squeeze the cone, which only leans on the ends of the arms without being damaged.

7. Device according to the claim 5, **characterised by** the fact to provide for a sensor suited to detect the presence of the cone between the arms of the pincers, in which said sensor emits a signal which is sent to the devices which activate the locking of the pincers.

8. Device according to the claim 7, **characterised by** the fact that said sensor is placed between the arms of the pincers.
